# EUROPEAN PATENT APPLICATION

(11) **EP 2 740 753 A1**
(43) Date of publication of application: **11.06.2014**
(21) Application number: 12290436.0
(22) Date of filing: 13.12.2012
(51) Int. Cl.: C08G 63/08, C08G 63/82, B01J 31/22

(54) **Polymerisation method**

(30) Priority: 07.12.2012 EP 12364007
(71) Applicant: Université de Strasbourg, 67400 Strasbourg (FR); Centre National de la Recherche Scientifique, 75016 Paris (FR)
(72) Inventor: Dagorne, Samuel, 67100 Strasbourg (FR)
(74) Representative: Novagraaf Technologies

(57) **Abstract**

A novel polymerisation method employing a novel cationic Zinc-complex as catalyst is devised.

## Description

The present invention relates to a new method of ring-opening polymerisation (ROP) of cyclic lactones and carbonates, a new cationic initiator complex to be used in such method and a new polymer obtained by such method, which polymer preferably is a polylactide polymer.

Polyester polymers such as poly-ε-caprolactone or polylactide are hallmarks of a greener chemistry. They are biodegradable, and the cyclic monomers are obtained by processing of biological, renewable raw material. Hitherto, ring-opening polymerisation (ROP) suffered from use of organic solvents as well as from a comparatively low activity of the polymerisation catalysts, resulting in lower average chain length of the polymers thus obtained. Chain termination or transfer reactions such as back-biting or scrambling are inter alia affected by the monomer concentration, the type of catalyst used and impurities in the monomer preparation. Nonetheless, ROP as a living polymerization theoretically allows of obtaining particularly well defined polymers having a very low polydispersity and thus very uniform product properties. The latter is particulary important for pharmaceutical applicances requiring regulatory approval.

Wheaton et al. (Chem. Commun. 2010, 46, 8404-8406) describes a novel cationic zinc-lactatester complex decorated with a tridentate bisphosphinimine ligand that, compared to the corresponding cationic alkyl-zinc complexes, showed good activity in the polymerisation of rac-lactide. Hower, the author also observed problems in obtaining higher molecular weights, high catalyst loads decreasing the number average molecular weight Mn of the polymer. High monomer loadings in contrast proved to shift the product Mn not in a linear, but asymptotic fashion to higher molecular weight, at the price of a strong increase in polydispersity by increasing level of side and chain termination reactions.

Similiarly, the present inventors earlier described in Romain et al. (Chem. Commun. 2012, 48, 22 13-2215) an uncharged, tridentate *N*-heterocyclic carbene ligand complex with Zircone which proved to polymerize rac-lactide in stereoselective manner. Whilst molecular weight Mn was found to increase in a more linear fashion with monomer concentration, polydispersity of the polymer product displayed a sharp broadening even at chain lengths of < 10.000 g/mol.

Ovitt et al. (J. Polymer Sc. 2000, Part A: Polymer Chemistry, Vol. 38, 4686-4692) reported obtaining polylactide from rac-lactide having alternating stereoblockwise isotacticity by polymerising rac-lactide with a racemic, uncharged aluminium-alkoxide catalyst. The catalyst employed an atropisomeric, tetradentate Binap-type ligand; chain shuttling between different enantiomers of the catalyst species was held to account for the stereoblock tacticity and hence kinetic resolution of the racemic monomer mixture. However, polymerisation was thus not conducted in a living mode, and correspondingly rather low average chain lengths were obtained only.

It is an object of the invention to overcome the disadvantages of the prior art and to devise a more efficient catalyst for ROP allowing of obtaining higher molecular weights concomittant with preserving a narrow polydispersity index.

This object was solved by devising a novel polymerisation protocol for ROP of polyesters or polycarbonats, further employing a novel catalyst species. According to the present invention, it is devised a polymerisation method, preferably for the obtention of a polyester or a polycarbonat or a co- or blockpolymeric mixed polymer thereof, comprising the step of polymerising at least one type of monomer selected from the group consisting of a monomer of formula I 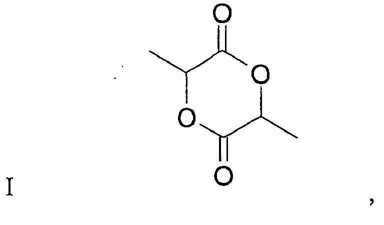 a monomer of formula II 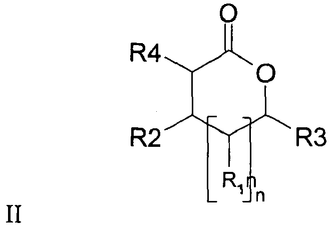 and a monomer of formula III 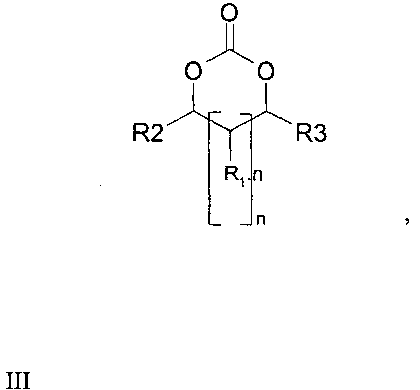 wherein independently in each of formulas I, II, III, n=0,1 or 2. It is particularly prefered that in formula II n is preferably 1 or 2, more preferably is 1, and/or that in formula III, n is preferably 1.

Further, R1.n, R2, R3 and R4, independently, are H, C1-C25 linear, branched or cyclic alkyl, C5-C25, preferably C6-C14, alkylaryl, aralkyl or aryl, wherein the alkyl and/or the aryl moieties may be, individually, further substituted with halogeno, preferably Cl or F, or wherein the alkyl may comprise an oxirane, ether, amido, amidino, alkenyl or alkinyl moiety.

Further the polymerisation according to the method of the present invention is carried out in the presence of a cationic initiator complex of formula IV

IV (Lₘ M-R^{a})⁺

or of formula V

V (Lₘ M-O-R^{a})⁺

wherein
L is a neutral, monodentate ligand, wherein m=1,2,3 or 4,
M is a zinc, magnesium or calcium, preferably zinc, atom having an oxidation state of + II. According to customs in inorganic chemistry and in accordance with the present invention, the letter 'L'designates an organic, ancillary ligand binding by its free, paired electrons coordinatively to the central metal atom.

R^{a} is an organic radical which is linear, branched or cyclic, preferably linear, C1-20, preferably C1-C10, alkyl or Si1-Si10 silyl, C6-C14 alkylaryl, aralkyl or aryl, and wherein the alkyl or aryl moieties may be, individually, further substituted with halogeno, preferably F or Cl, and wherein the aryl moieties may comprise N- and/or O-heteroaromatic aryl, and wherein the alkyl, silyl or aryl moieties may be, individually, further substituted with -NR^{b}R^{c}, -COO-R^{b}, -O-C(=O)-R^{b}, -N-C(=O) -R^{b}, -C(=O)N-R^{b} ,-OH, -NC(=O)N R^{b}, -OBoc, -NBoc, (- (O)ᵥSi [-(O)ₓR^{b}][-(O)_{y}R^{c}][-(O)_{z}R^{d}])₁ with the proviso that v,x,y,z are, individually, 0 or 1, and that 1 is 1,2,3, 4 or 5, or wherein, with the proviso that the complex is of formula V, the alkyl, silyl or aryl moieties may be, individually, further substituted with -O-R^{b}, -S-R^{b} or -PR^{b}R^{c},
wherein R^{b}, R^{c}, R^{d}, individually, are C1-C14 alkyl or C6-C14 aryl, arylalykl or aralkyl, which alkyl or aryl moieties may be further substituted with halogeno, preferably Cl or F. Fundamentally, the polymerisation method may be carried out with either one of the two catalyst species IV or V, but with the proviso that wherein the polymerisation reaction is carried out with a cationic initiator complex of formula IV,that then either the reaction is carried out in the further presence of an alcohol of formula VI

VI R^{a}-OH

or that the initiator complex is preincubated with an alocohol of formula VI or both.

Preferably, the polymerisation is carried out comprising at least monomer of formula I, giving rise to a mixed or homogenous polylactide, and wherein said monomer of formula I is S-lactide (S,S-lactide) and/or is rac-lactide. S-lactide allows directly of obtaining stereopure, isotactic polymer product, having better crystallinity and thus higher melting point, suitable for extrusion processing and the like.More preferably, the polymerisation is carried out as to provide a block-copolymer product of the monomers of formula I and formula III.

In a further strongly preferred embodiment, the polymersation is carried out in the presence of the alcohol of formula VI, that is irrespective which catalyst complex IV or V is employed, and the polymerisation is substantially carried out in the absence of any solvent other than the alcohol of formula VI and liquid monomer, more preferably wherein the polymerisation is carried out at a temperature of from 110 to 145 °C and most preferably is carried out at a molar ratio of the initiator complex IV and/or V: alcohol VI : monomer of formula I,II and/or III of from 1: <3: <1000, again most preferably said molar ratio ranging of from 1:≤4 to <10:≤1500. It is that both best conversion rates as well as highest chain lengths, in terms of number average molecular weight, are achieved, concomittant with a constantly narrow PDI. Further, the excess of liquid monomer that can be used without detrimental effect on the polymerisation makes the use of any additional organic solvent obsolete, rendering the polymerisation method environmentally friendly. It is not only waste though that is avoided, but also technical effort for removing such solvent; further, the presence of VOC in plastics presents a regulatory/toxicological problem in general, in particular for use in food packaging or medical implant applications, where biodegradability is sought after.

Without wanting to be bound by theory, it is hypothesized that the unexpected high catalytic efficiency of the catalyst species of the present invention is achieved for reason of using monodentate, weakly binding ligands L; the binding of L is the result of using the neutral ligand L as a solvent during catalyst preparation. L is an apolar, preferably aprotic, solvent that is liquid at room temperature, and preferably boils at a temperature < 100 °C, that is it can be easily removed by destillation under mild conditions in an evaporator.L is a 'soft' Lewis base, according to the HSAB classification scheme of Pearson (R. Pearson, 'The HSAB principle - more quantitative aspects', Inorganica Chimica Acta Vol. 240, No.1/2, 1995, S.93-98). It is believed, without wanting to be bound by such belief, that once the catalyst of the present invention is placed in the a more concentrated monomer liquid, this ancillary ligands L are replaced by monomer coordinating the cationic zinc via their ester groups. This way, several molecules of the monomers are directly associated, in contrast to the complex catalysts of the prior art, with the catalytic metal centre that is coordinating, supposedly in a concerted manner, the reaction between the lactone or carbonate function of the monomer and the nascent, metal-coordinated alkoxy function of the growing chain end. This is quite a novel catalytic mechanism, compared to the tightly bound, large-structured multidentate ligands of the prior art. Additional experimental corroboration comes from the fact that in our hands, adding substantial (e.g. monomer: solvent =1:1) amounts of an inert solvent such as toluene to the reaction, completely killed catalyst activity as is shown in the experimental section.

In another prefered embodiment, (US claim format) the polymerisation mixture is consisting essentially of the alcohol of formula VI, the initator complex and at least one of the monomers I, II and/or III.

Further prefered, the polymerisation provides a polymer product having a number-average molecular weight (Mn) ≥ 50.000 g/mol and a polydispersity index (PDI) value of from >1 to 1.6" preferably a PDI value of from 1.05 to 1.55, more preferably a PDI value of from 1.1 to 1.4.

The Mn value was routinely determined by GPC; GPC analyses were carried out with a waters instrument (M510 pump, U6K injector) equipped with Waters UV486 and Milton Roy differential refractive index detectors and four 5-µl PL gel columns (Polymer Laboratories, 10 nm, 50 nm and 100 nm, and C porosity) in series. The GPC columns were eluted with THF at 45°C at 1 mL/min and were calibrated with 23 monodisperse polystyrene standards.- Analysis of the GPC data and calculation of the Mn and PDI values was done with standard GPC software.

Preferably, the ligand L is an apolar, preferably aprotic, solvent that is liquid at 25°C and is comprising N, O and/or S as heteroatom, preferably is an aromatic N, S and/or O heterocycle with a ring size of 5 or 6 atoms, or is R^{q}-NH2, R^{p}-O-R^{o}, R^{p}-S-R^{o}or R^{p}-CN, wherein R^{q} is C6 to C14 aryl or aralkyl and wherein R^{p,} R^{o} independently, are C1-C4 aliphatic, preferably linear, alkyl or are C6-C14 aryl or alkylaryl, preferably alkylaryl, more preferably L is selected from the group consisting of pyridine, pyrimidine, pyridazine, piperazine, aniline, 4-methyl- and 4-ethyl-aniline, tetrahydrofurane, thiophene, oxazol, isooxazol,thiazol, isothiazol and ethers of formulas R^{p}-O-R^{o} and/or R^{p}-S-R^{o} wherein R^{p}, R^{o}, independently or symmetrically, are C1-C3, preferably linear, alkyl.

More prefered in the context of the above described polymerisation method, in formulas IV, V, VI, R^{a} is linear, cyclic or branched C1-C10 alkyl or is C6-C14 alkylaryl with the proviso that the initiator complex is of formula V, and wherein the alkyl or aryl moieties may be, individually, further substituted with halogeno, preferably F or Cl, more preferably wherein R^{a} is methyl, ethyl, n-propyl, i-propyl or is, with the proviso that the initiator complex is of formula V, benzyl.

(US claim format) A further object of the invention is a polymer which is a polyester or a polycarbonat or a mixed-polymer thereof which may be co- or blockpolymeric, said polymer comprising at least monomers of formulas I, II and/or III, the above given definitions for the monomers being incorporated hereto by reference, which polymer product has a number-average molecular weight (Mn) ≥ 50.000 g/mol and a polydispersity index (PDI) value of from >1 to 1.6" preferably a PDI value of from 1.05 to 1.55, more preferably a PDI value of from 1.1 to 1.4.

A further object of the present invention is a polymer obtained by the method of one of claims 1-8, which is preferably a polyester or a polycarbonat or a mixed-polymer thereof which may be co- or blockpolymeric, wherein the polymer product has a number-average molecular weight (Mn) ≥ 50.000 g/mol and a polydispersity index (PDI) value of from >1 to 1.6" preferably has a PDI value of from 1.05 to 1.55, more preferably a PDI value of from 1.1 to 1.4. Preferably, such polymer has been polymerised at least for part from the lactide monomer of formula I, preferably wherein the polymer is a block-copolymer product of the monomers of formula I and formula III and/or wherein the monomer of formula I was S,S-lactid for polymerising isotactic polymer segments with increased crystallinity therefrom.

In another prefered embodiment, it is prefered to produce a block-copolymer by polymerising, due to the living polymerisation properties of the catalytic initiator complex of the present invention, alternatingly the R- and the S-lactide monomer, as to obtain a more stable polymer wherein inter- or intrachain segments associate to form more stable, crystalline stereocomplexes of Poly(S-Lactide)/Poly (R-Lactide); this phenomenon and the associated, improved features of such product are known from the prior art.

Another object of the present invention is the cationic initiator complex for ring-opening polymerisation, according to the polymerisation method of the present invention in its above and below captioned embodiments or any combination thereof, said complex being of formula IV

IV (Lₘ M-R^{a})⁺

or of formula V

V (Lₘ M-O-R^{a})⁺

wherein
L is a neutral, monodentate ligand, wherein m=1,2,3 or 4,
M is a magnesiu, calcium or zinc, preferably zinc, atom having an oxidation state of + II,
R^{a} is an organic radical which is linear, branched or cyclic, preferably linear, C1-20, preferably C1-C10, alkyl or Si1-Si10 silyl, C6-C14 alkylaryl, aralkyl or aryl, and wherein the alkyl or aryl moieties may be, individually, further substituted with halogeno, preferably F or Cl, and wherein the aryl moieties may comprise N- and/or O-heteroaromatic aryl, and wherein the alkyl, silyl or aryl moieties may be, individually, further substituted with -NR^{b}R^{c}, -COO-R^{b}, -O-C(=O)-R^{b}, -N-C(=O) -R^{b}, -C(=O)N-R^{b} ,-OH, -NC(=O)N R^{b}, -OBoc, -NBoc, (- (O)ᵥSi [-(O)ₓR^{b}][-(O)_{y}R^{c}][-(O)_{z}R^{d}])₁ with the proviso that v,x,y,z are, individually, 0 or 1, and that 1 is 1,2,3, 4 or 5, or wherein, with the proviso that the complex is of formula V, the alkyl, silyl or aryl moieties may be, individually, further substituted with -O-R^{b}, -S-R^{b} or -PR^{b}R^{c},
and wherein R^{b}, R^{c}, R^{d}, individually, are C1-C14 alkyl or C6-C14 aryl, arylalykl or aralkyl, which alkyl or aryl moieties may be further substituted with halogeno, preferably Cl or F.

Preferably, the cationic initiator complex is provided in the form of an ion pair or salt of formula VII

VII (Lₘ M-R^{a})⁺ X⁻

or of formula VIII

VIII (Lₘ M-O-R^{a})⁺ X⁻

wherein X- is a lipophilic, sterically hindered complex anion, preferably is an anionic borate complex. Such lipophilic anions are well known from being used in phase transfer catalysis.

More preferably, X- is an anionic borate complex selected from the group consisting of tetrakis(pentafluoro-phenyl)-borate, C1-C4-alkyl-tris(pentafluoro-phenyl)-borate, preferably methyl- or ethyl-tris(pentafluoro-phenyl)-borate, tetrakis-(3,5-bis[trifluoromethyl]-phenyl)-borate, tetrakis-(3,5-bis[di(trifluoromethyl)-Z-methyl]-phenyl)-borate wherein substituent Z is fluoro-, C1-C4 alkoxy- or trifluoromethyl-C1-C3-alkoxy-. These compounds are well known in the art. Useful synthetic methods are described, along with further work referenced, e.g. Kobayashi et al., J. Fluorine Chemistry, Vol. 54, Sept.-Oct. 1991, p. 61 ff.

### Experimental Section

### Synthesis of the cationic complex [L₃ZnOCH₂Ph]⁺ (L = Et₂O) via (Et₂O)₃ZnMe⁺B(C₆F₅)₄ ⁻

In a Schlenk flask under dry N₂, [H(OEt₂)₂][B(C₆F₅)₄] (154.0 mg, 1.00 mmol) was dissolved in 10 mL of dry Et₂O and an equimolar amount of ZnMe₂ (185 µL, 1.00 mmol) was added via a syringue. The reaction mixture was stirred at room temperature for 1h and evaporated to dryness to afford a colorless residue. The crude product was subsequently washed with pentane to quantitatively afford the zinc cation (Et₂O)₃ZnMe⁺ as a B(C₆F₅)₄⁻ salt. The latter was then dissolved in CH₂Cl₂ (5mL) and PhCH₂OH (104 µL, 1.00 mmol) and allowed to react for 1h at room temperature, after which it was evaporated to dryness and washed with pentane to yield (Et₂O)₃ZnOCH₂Ph⁺ as a B(C₆F₅)₄⁻ salt, as a colorless solid (95% yield, 224 mg).
¹H NMR (300 MHz, CD₂Cl₂): δ 7.45 (m, 3H, Ph), 7.31 (m, 2H, Ph), 4.96 (s, CH₂-Ph), 3.91 (6H, CH₂-Et₂O), 1.29 (9H, CH₂-Et₂O).

### Synthesis of the cationic complex [L₃ZnOCH₂Ph]⁺ (L = THF, pyridine) via (Et₂O)₃ZnMe⁺ B(C₆F₅)₄ ⁻

For the synthesis of the zinc cations with L = THF or pyridine, the experimental procedure is the same as in exp. 1 above up to the formation of (Et₂O)₃ZnMe⁺ as a B(C₆F₅)₄⁻ salt. At that stage,different from exp. 1 above, the latter was then dissolved in THF (or pyridine) to afford the corresponding (L)₃ZnMe⁺ cation as a B(C₆F₅)₄⁻ salt. This was subsequently converted again as described in exp. 1 to the zinc alkoxide cation (L)₃ZnOCH₂Ph⁺ (as a B(C₆F₅)₄⁻ salt). In all cases, the salts species were isolated as colorless solids.

### 3.Polymerization Experiments:

### 3.a ROP of rac-lactide (Bulk conditions: in melted monomer matrix, @130 °C):

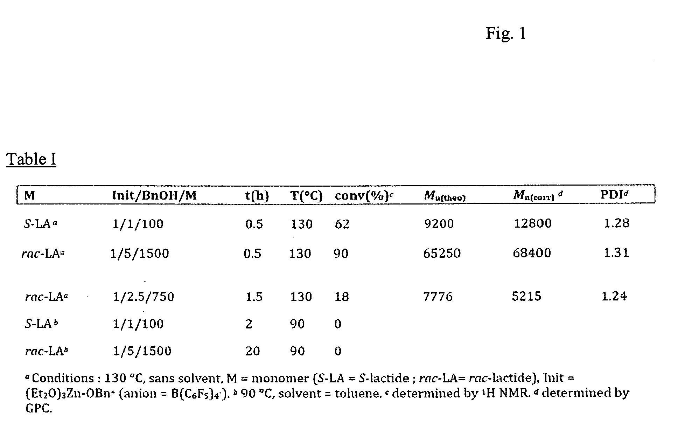

Complex [(Et₂O)₃ZnOCH₂Ph][B(C₆F₅)₄] (5 mg, 5 µmol, 1 equiv.) was charged in a flask under nitrogen, and the desired number of equiv. of BnOH (5 equiv.) was added at room temperature. The appropriate amount of *rac*-lactide was then added (1.08 g, 7.53 mmol, 1500 equiv.). The flask was tightly closed, placed in a pre-heated oil bath at 130 °C and vigorously stirred for 30 min. After this time, the reaction mixture was allowed to cool to room temperature and an aliquot was analyzed by ¹H NMR to estimate the monomer-to-polymer conversion (90% conversion to PLA). The reaction mixture was then quenched with MeOH provoking the precipitation of the polymer as a colorless solid. A subsequent filtration was carried out and the PLA material was dried under vacuum till constant weight. ¹H NMR analysis, MALDI-Tof and SEC analysis agree with a narrow disperse PhCH₂O-chain-ended material (GPC data: *M*ₙ = 68400 g.mol⁻¹, PDI = 1.31). The reaction data are given in the table in Fig. 1, line 2 as well.

### 3.b ROP of S-lactide (Bulk conditions: in melted monomer matrix, @130 °C):

- The same procedure as in section 3.a was used for the polymerization of L-LA.cp. Fig. 1, table, line 1

### 3.c.i In situ catalyst activation procedure:

The reactive zinc alkoxide initiator species may be generated *in situ* in the presence of the lactide monomer using [(Et₂O)₃ZnMe][B(C₆F₅)₄] as the pre-initiator and with direct addition of benzyl alcohol (see procedure below).
Complex [(Et₂O)₃ZnMe][B(C₆F₅)₄] (5 mg, 5 µmol, 1 equiv.) was charged in a flask under nitrogen, and the desired number of equiv. of BnOH (6 equiv.) was added at room temperature. The appropriate amount of *rac-*lactide was then added (1.08 g, 7.53 mmol, 1500 equiv.). The flask was tightly closed, placed in a pre-heated oil bath at 130 °C and vigorously stirred for 30 min. After this time, the reaction mixture was allowed to cool to room temperature and an aliquot was analyzed by ¹H NMR to estimate the monomer-to-polymer conversion (90% conversion to PLA). The reaction mixture was then quenched with MeOH provoking the precipitation of the polymer as a colorless solid. A subsequent filtration was carried out and the PLA material was dried under vacuum till constant weight. 1H NMR analysis, MALDI-Tof and GPC analysis agree with a narrow disperse PhCH₂O-chain-ended material (GPC data: *M*ₙ = 68400 g.mol⁻¹, PDI = 1.31).

### 3.c.ii ROP of ε-caprolactone (Bulk conditions: in liquid monomer, @60 °C):

Complex [(Et₂O)₃ZnMe][B(C₆F₅)₄] (5 mg, 5 µmol, 1 equiv.) was charged in a flask under nitrogen, and the desired number of equiv. of PhCH₂OH (3 equiv.) was added at room temperature. The appropriate amount of *rac-*lactide was then added (860.0 mg, 7.53 mmol, 1500 equiv.). The flask was tightly closed, placed in a pre-heated oil bath at 60 °C and vigorously stirred for 2h min. After this time, the reaction mixture was allowed to cool to room temperature and an aliquot was analyzed by ¹H NMR to estimate the monomer-to-polymer conversion (91% conversion to ε-PCL). The reaction mixture was then quenched with MeOH provoking the precipitation of ε-PCL as a colorless solid. A subsequent filtration was carried out and the PLA material was dried under vacuum till constant weight. ¹H NMR analysis, MALDI-Tof and SEC analysis agree with a narrow disperse PhCH₂O-chain-ended material (GPC data: *M*ₙ = 52000 g.mol⁻¹, PDI = 1.8).

### 3.d ROP of trimethylene carbonate (TMC) (Bulk conditions: in liquid monomer, @70 °C):

The same procedure as for the ROP of ε-caprolactone in the preceding section was followed:
Complex [(Et₂O)₃ZnMe][B(C₆F₅)₄] (5 mg, 5 µmol, 1 equiv.) was placed in a flask and 3 equiv. PhCH₂OH (1.56 µl, 15 µmol, 3 equiv.) were added, followed by the addition of TMC (255.2 mg, 2.5 mmol, 500 equiv.). The flask was tightly closed, placed in a pre-heated oil bath at 60 °C and vigorously stirred for 90 min. After this time, the reaction mixture was allowed to cool to room temperature and an aliquot was analyzed by ¹H NMR to estimate the monomer-to-polymer conversion (quantitative conversion to poly(trimethylene) carbonante (PTMC)). The reaction mixture was then quenched with MeOH provoking the precipitation of PTMC as a colorless solid. A subsequent filtration was carried out and the PLA material was dried under vacuum till constant weight. ¹H NMR analysis, MALDI-Tof and SEC analysis agree with a narrow disperse PhCH2O-chain-ended material (GPC data: *M*ₙ = 56000 g.mol⁻¹, PDI =1.31)

## Claims

1. Method of polymerisation, preferably for obtaining a polymer which is a polyester or a polycarbonat or a mixed-polymer thereof, comprising the step of polymerising at least one type of monomer selected from the group consisting of a monomer of formula I 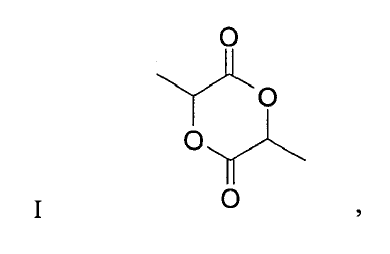 a monomer of formula II 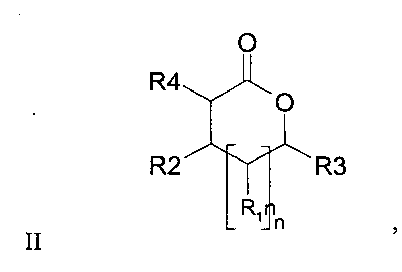 and a monomer of formula III 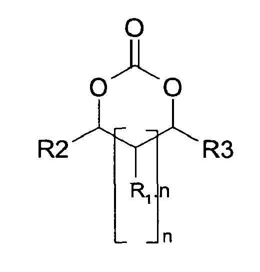 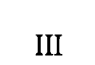 wherein for each of formulas I, II, III independently, n=0,1 or 2, preferably wherein independently, in formula II n is preferably 1 or 2, and/or in in formula III, n is preferably 1, and
wherein R1.n, R2, R3 and R4, independently, is H, C1-C25 linear, branched or cyclic alkyl, C5-C25, preferably C6-C14, alkylaryl, aralkyl or aryl, and wherein the alkyl and/or the aryl moieties may be, individually, further substituted with halogeno, preferably Cl or F, or wherein the alkyl may comprise an oxirane, ether, amido, amidino, alkenyl or alkinyl moiety,
and wherein the polymerisation is carried out in the presence of a cationic initiator complex of formula IV
IV (Lₘ M-R^{a})⁺
Or of formula V
V (Lₘ M-O-R^{a})⁺
wherein
L is a neutral, monodentate ligand, wherein m=1,2,3 or 4,
M is a magnesium, calcium or zinc, preferably zinc, atom having an oxidation state of + II,
R^{a} is an organic radical which is linear, branched or cyclic, preferably linear, C1-20, preferably C1-C10, alkyl or Si1-Si10 silyl, C6-C14 alkylaryl, aralkyl or aryl, and wherein the alkyl or aryl moieties may be, individually, further substituted with halogeno, preferably F or Cl, and wherein the aryl moieties may comprise N- and/or O-heteroaromatic aryl, and wherein the alkyl, silyl or aryl moieties may be, individually, further substituted with -NR^{b}R^{c}, -COO-R^{b}, -O-C(=O)-R^{b}, -N-C(=O) -R^{b}, -C(=O)N-R^{b} ,-OH, -NC(=O)N R^{b}, -OBoc, -NBoc, (- (O)ᵥSi [-(O)ₓR^{b}][-(O)_{y}R^{c}][-(O)_{z}R^{d}])₁ with the proviso that v,x,y,z are, individually, 0 or 1, and that 1 is 1,2,3, 4 or 5, or wherein, with the proviso that the complex is of formula V, the alkyl, silyl or aryl moieties may be, individually, further substituted with -O-R^{b}, -S-R^{b} or -PR^{b}R^{c},
and wherein R^{b}, R^{c}, R^{d}, individually, are C1-C14 alkyl or C6-C14 aryl, arylalykl or aralkyl, which alkyl or aryl moieties may be further substituted with halogeno, preferably Cl or F,
and with the proviso that wherein the polymerisation reaction is carried out with a cationic initiator complex of formula IV,that either the reaction is carried out in the further presence of an alcohol of formula VI
VI R^{a}-OH
or that the initiator complex is preincubated with an alocohol of formula VI or both.

2. Method of polymerisation according to claim 1, wherein the polymerisation is carried out comprising at least monomer of formula I, and wherein the monomer of formula I is S-lactide (S,S-lactide) and/or is rac-lactide.

3. Method of polymerisation according to one of the preceding claims, wherein the polymersation is carried out in the presence of alcohol of formula VI and substantially in the absence of any solvent other than the alcohol of formula VI and liquid monomer, preferably that the polymerisation is carried out at a temperature of from 110 to 145 °C and preferably is carried out at a molar ratio of the initiator complex IV and/or V: alcohol VI : monomer of formula I,II and/or III of from 1: <3: <1000, preferably of from 1:≤4 to <10:≤1500.

4. Method of polymerisation according to one of the preceding claims, wherein the polymerisation mixture is consisting essentially of the alcohol of formula VI, the initator complex and at least one of the monomers I, II and/or III.

5. Method of polymerisation of claim 2, wherein the polymerisation is carried out as to provide a block-copolymer product of the monomers of formula I and formula III.

6. Method of polymerisation according to one of the preceding claims, wherein the polymerisation provides a polymer product having a number-average molecular weight (Mn) ≥ 50.000 g/mol and a polydispersity index (PDI) value of from >1 to 1.6, preferably a PDI value of from 1.05 to 1.55, more preferably a PDI value of from 1.1 to 1.4.

7. Method of polymerisation according to one of the preceding claims, wherein L is an apolar, preferably aprotic, organic solvent that is liquid at 25°C comprising N, O and/or S as heteroatom, preferably is a soft Lewis base comprising N, O and/or S as heteroatom, and preferably is an aromatic N, S and/or O heterocycle with a ring size of 5 or 6 atoms, or is R^{q}-NH₂, R^{p}-O-R^{o,}R^{p}-S-R^{o}or R^{p}-CN, wherein R^{q} is C6 to C14 aryl or aralkyl and wherein R^{p}, R^{o} independently, are C1-C4 aliphatic, preferably linear, alkyl or are C6-C14 aryl or alkylaryl, preferably alkylaryl, more preferably L is selected from the group consisting of pyridine, pyrimidine, pyridazine, piperazine, aniline, 4-methyl-aniline, 4-ethyl-aniline, tetrahydrofurane, thiophene, oxazol, isooxazol,thiazol, isothiazol and ethers of formulas R^{p}-O-R^{o} and/or R^{p}-S-R^{o} wherein R^{p,} R^{o}, independently or symmetrically, are C1-C3, preferably linear, alkyl.

8. Method of polymerisation according to one of the preceding claims, wherein R^{a} is linear, cyclic or branched C1-C10 alkyl or is C6-C14 alkylaryl with the proviso that the initiator complex is of formula V, and wherein the alkyl or aryl moieties may be, individually, further substituted with halogeno, preferably F or Cl, more preferably wherein R^{a} is methyl, ethyl, n-propyl, i-propyl or is, with the proviso that the initiator complex is of formula V, benzyl.

9. Polymer obtained by the method of one of claims 1-8, which polymer product has a number-average molecular weight (Mn) ≥ 50.000 g/mol and a polydispersity index (PDI) value of from >1 to 1.6, preferably has a PDI value of from 1.05 to 1.55, more preferably has a PDI value of from 1.1 to 1.4.

10. Polymer of claim 9, which polymer has been polymerised at least for part from the lactide monomer of formula I, preferably wherein the polymer is a block-copolymer product of the monomers of formula I and formula III and/or wherein the monomer of formula I was S,S-lactid for polymerising isotactic polymer segments with increased crystallinity therefrom.

11. Cationic initiator complex for ring-opening polymerisation, of formula IV
IV (Lₘ M-R^{a})⁺
or of formula V
V (Lₘ M-O-R^{a})⁺
wherein
L is a neutral, monodentate ligand, wherein m=1,2,3 or 4,
M is a magnesium, calcium or zinc, preferably zinc, atom having an oxidation state of + II,
R^{a} is an organic radical which is linear, branched or cyclic, preferably linear, C1-20, preferably C1-C10, alkyl or Si1-Si10 silyl, C6-C14 alkylaryl, aralkyl or aryl, and wherein the alkyl or aryl moieties may be, individually, further substituted with halogeno, preferably F or Cl, and wherein the aryl moieties may comprise N- and/or O-heteroaromatic aryl, and wherein the alkyl, silyl or aryl moieties may be, individually, further substituted with -NR^{b}R^{c}, -COO-R^{b}, -O-C(=O)-R^{b}, -N-C(=O) -R^{b}, -C(=O)N-R^{b}, -OH, -NC(=O)N R^{b}, -OBoc, -NBoc, (- (O)ᵥSi [-(O)ₓR^{b}][-(O)_{y}R^{c}][-(O)_{z}R^{d}])₁ with the proviso that v,x,y,z are, individually, 0 or 1, and that 1 is 1,2,3, 4 or 5, or wherein, with the proviso that the complex is of formula V, the alkyl, silyl or aryl moieties may be, individually, further substituted with -O-R^{b}, -S-R^{b} or -PR^{b}R^{c},
and wherein R^{b}, R^{c}, R^{d}, individually, are C1-C14 alkyl or C6-C14 aryl, arylalykl or aralkyl, which alkyl or aryl moieties may be further substituted with halogeno, preferably Cl or F.

12. Cationic initiator complex of claim 11, wherein the complex is provided in the form of an ion pair or salt of formula VII
VII (Lₘ M-R^{a})⁺ X⁻
or of formula VIII
VIII (Lₘ M-O-R^{a})⁺ X⁻
Wherein X⁻is a lipophilic, sterically hindered complex anion, preferably is an anionic borate complex.

13. Cationic initiator complex of claim 12, wherein X- is an anionic borate complex selected from the group consisting of tetrakis(pentafluoro-phenyl)-borate, C1-C4-alkyl-tris(pentafluoro-phenyl)-borate, preferably methyl- or ethyl-tris(pentafluoro-phenyl)-borate, tetrakis-(3,5-bis[trifluoromethyl]-phenyl)-borate, tetrakis-(3,5-bis[di(trifluoromethyl)-Z-methyl]-phenyl)-borate wherein substituent Z is selected from the group consisting of fluoro-, C1-C4-alkoxy- and trifluoromethyl-C1-C3-alkoxy-.
